# EUROPEAN PATENT SPECIFICATION

(11) **EP 4 370 788 B1**
(45) Date of publication and mention of the grant of the patent: **04.03.2026**
(21) Application number: 21778692.0
(22) Date of filing: 31.08.2021
(51) Int. Cl.: F02B 63/04, B65D 90/00, E04B 1/348, E04H 5/02, E04B 1/24

(54) **SYSTEM AND METHOD FOR ASSEMBLING MODULES**
SYSTEM UND VERFAHREN ZUR MONTAGE VON MODULEN
SYSTÈME ET PROCÉDÉ DE MONTAGE DE MODULES

(43) Date of publication of application: 22.05.2024
(73) Proprietor: Siemens Energy Global GmbH & Co. KG, 81739 München (DE)
(72) Inventor: HALTERMAN, Brandon, Winter Springs, Florida 32708 (US)
(74) Representative: Isarpatent
(86) International application number: PCT/US2021/071322
(87) International publication number: WO 2023/033856

(56) References cited:
- EP-A1- 3 366 903
- WO-A1-2020/201735
- WO-A1-2020/240745
- DE-A1- 3 016 224
- JP-A- H07 243 239
- US-A- 3 925 679
- US-A1- 2022 049 491

## Description

### BACKGROUND

A gas turbine engine typically includes a compressor section, a turbine section, and a combustion section disposed therebetween. The compressor section includes multiple stages of rotating compressor blades and stationary compressor vanes for compressing air. The combustion section typically includes a plurality of combustors for mixing the compressed air and fuel and producing combustion gases. The turbine section includes multiple stages of rotating turbine blades and stationary turbine vanes that expands the combustion gases to convert the thermal and pressure energy into rotating or mechanical work.

Installation of the gas turbine engine on a site includes install auxiliary components that cooperatively work together with the gas turbine engine. The auxiliary components include piping, valves, instrumentation, junction boxes, conduit and cables, enclosure panels, etc.. WO2020/201735A1 discloses a connector for connecting components for the assembly of modules comprising a post that can act as an auxiliary component.

### BRIEF SUMMARY

**In** one aspect, a system for assembling modules includes a first module having a first set of columns that cooperate to define a first space. A first column of the first set of columns defines a first hollow interior. The system includes a second module having a second set of columns that cooperate to define a second space. A first column of the second set of columns defines a second hollow interior. The system includes a first plate that is fixedly attached to the first column of the first set of columns within the first hollow interior. The system includes an alignment pin that is fixedly coupled to the first plate. The system includes a second plate having a hole sized to receive the alignment pin. The second plate is engaged with the alignment pin to position the second plate in an aligned position with respect to the first column of the second set of columns. The system includes an attachment member that is fixedly attached to the second plate and the first column of the second set of columns to fixedly attach the second plate in the aligned position within the second hollow interior.

In one aspect, a system for assembling modules includes a first module having a first set of columns that cooperate to define a first space. A first column of the first set of columns defines a first hollow interior. The system includes a first auxiliary package that is installed within the first space. The system includes a second module having a second set of columns that cooperate to define a second space. A first column of the second set of columns of defines a second hollow interior. The system includes a second auxiliary package that is installed within the second space. The system includes a first plate that is fixedly attached at a top end of the first column of the first set of columns within the first hollow interior. The system includes an alignment pin that is fixedly coupled to the first plate. The system includes a second plate having a hole sized to receive the alignment pin. The second plate is engaged with the alignment pin to position the second plate in an aligned position with respect to the first column of the second set of columns that aligns the second auxiliary package with the first auxiliary package when the second module is assembled to the first module. The system includes an attachment member that is fixedly attached to the second plate and the first column of the second set of columns to fixedly attach the second plate in the aligned position at a bottom end of the first column of the second set of columns within the second hollow interior.

In one aspect, a method for assembling modules includes arranging a first module having a first set of columns that cooperate to define a first space. A first column of the first set of columns defines a first hollow interior. The method includes installing a first auxiliary package within the first space. The method includes arranging a second module having a second set of columns that cooperate to define a second space. A first column of the second set of columns defines a second hollow interior. The method includes installing a second auxiliary package within the second space. The method includes fixedly attaching a first plate to a top end of the first column of the first set of columns within the first hollow interior. The method includes coupling an alignment pin to the first plate. The method includes positioning a second plate over the alignment pin. The second plate includes a hole to receive the alignment pin. The method includes adjusting a position of the second plate in an aligned position with respect to the first column of the second set of columns. The method includes stacking the second module on a top of the first module by sliding the first column of the second set of columns over the second plate to place the second plate in the aligned position within the second hollow interior that aligns the second auxiliary package with the first auxiliary package. The method includes fixedly attaching the second plate to the first column of the second set of columns in the aligned position at a bottom end of the first column of the second set of columns within the second hollow interior.

### BRIEF DESCRIPTION OF THE DRAWINGS

To easily identify the discussion of any particular element or act, the most significant digit or digits in a reference number refer to the figure number in which that element is first introduced.
FIG. 1 illustrates a perspective view of a system of assembled modules.
FIG. 2 illustrates a perspective exploded view of a portion of the system in FIG. 1.
FIG. 3 illustrates a perspective assembled view of the portion of the system in FIG. 2.
FIG. 4 illustrates a side view of the portion of the system in FIG. 2.
FIG. 5 illustrates a perspective exploded view of a portion of the system in FIG. 1 in a shipping configuration.
FIG. 6 illustrates a perspective assembled view of the portion of the system in FIG. 5 in the shipping configuration.

### DETAILED DESCRIPTION

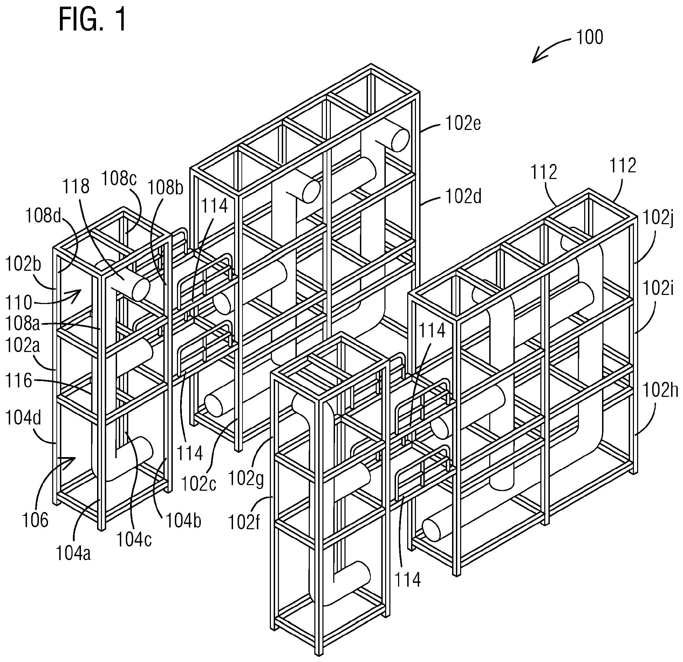

FIG. 1 illustrates a perspective view of a system 100. The system 100 includes a plurality of modules assembled together. In the arrangement shown in FIG. 1, the system 100 includes a first module 102a, a second module 102b, a third module 102c, a fourth module 102d, a fifth module 102e, a sixth module 102f, a seventh module 102g, an eighth module 102h, a ninth module 102i, and a tenth module 102j. The second module 102b is stacked on top of the first module 102a. The fourth module 102d is stacked on top of the third module 102c. The fifth module 102e is stacked on top of the fourth module 102d. The seventh module 102g is stacked on top of the sixth module 102f. The ninth module 102i is stacked on top of the eighth module 102h. The tenth module 102j is stacked on top of the ninth module 102i. In other arrangements, it is possible that the system 100 may include different numbers of modules and assembled together in different ways. Each module is structural steel framed. Other arrangements of frames are also possible.

Each module of the plurality of modules 102a - 102j includes a set of columns. The set of columns extend vertically and cooperate to define a space delimited by the columns. The first module 102a includes a first set of columns. The first set of columns includes a first column 104a, a second column 104b, a third column 104c, and a fourth column 104d. The first set of columns 104a -104d of the first module 102a cooperate to define a first space 106.

The second module 102b includes a second set of columns. The second set of columns includes a first column 108a, a second column 108b, a third column 108c, and a fourth column 108d. The second set of columns 108a - 108d cooperate to define a second space 110. The rest of the modules 102c - 102j have the similar configurations of the first module 102a and the second module 102b.

In the arrangement shown in FIG. 1, each module of the plurality of modules 102a -102j has a rectangle cross-section shape defined by four columns. In other arrangement, it is possible that the modules have different shapes defined by different numbers of columns. For example, the module may have a triangular cross-section shape defined by three columns, or a pentagon cross-section shape defined by five columns, or an arc cross-section shape defined by at least two columns, etc.

Each column of the plurality of columns in each module is a square cross-section tube. It is also possible that the columns may have any other desired cross-sectional shapes, such as, a rectangular cross-section tube, a triangular cross-section tube, a pentagon cross-section tube, an arc-cross-section tube, or a cylindrical cross-section tube, etc.

Each module of the plurality of modules 102a - 102j includes a plurality of beams 112. Each beam 112 of the plurality of beams 112 extends horizontally between two adjacent vertical columns of a set of columns along a perimeter of the space defined by the set of the columns.

The system 100 includes a plurality of bridge platforms 114 that connect modules. In the arrangement shown in FIG. 1, the system 100 includes four bridge platforms 114. A first bridge platform 114 connects the first module 102a and the fourth module 102d. A second bridge platform 114 connects the second module 102b and the fifth module 102e. The third bridge platform 114 connects the sixth module 102f and the ninth module 102i. The fourth bridge platform 114 connects the seventh module 102g and the tenth module 102j. In other arrangements, it is possible that the system 100 includes different numbers of bridge platforms 114 that connect to different modules.

Each module of the plurality of modules 102a - 102j includes an auxiliary package installed within a respective space of each module. For example, a first auxiliary package 116 is installed within the first space 106 of the first module 102a. A second auxiliary package 118 is installed within the second space 110 of the second module 102b. Each auxiliary package includes a respective set of auxiliary components, such as a respective set of piping, valves, instrumentation, junction boxes, conduit and cables, enclosure panels, etc. Auxiliary components of adjacent auxiliary packages are aligned to each other when the modules are assembled.

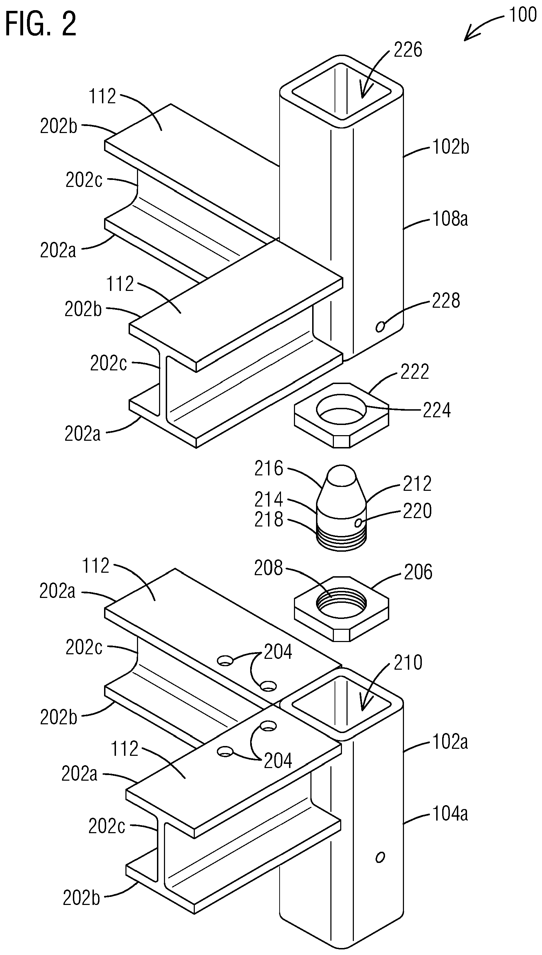

FIG. 2 illustrates a perspective exploded view of a portion of the system 100 in FIG. 1. The portion of the system 100 includes the first module 102a and the second module 102b. The first column 104a of the first module 102a is a square cross-section tube. The first column 108a of the second module 102b is a square cross-section tube. It is possible that the first column 104a of the first module 102a and the first column 108a of the second module 102b may have other configurations, such as, rectangular cross-section tube, a triangular cross-section tube, a pentagon cross-section tube, an arc-cross-section tube, or a cylindrical cross-section tube, etc.

Two beams 112 extend from two side surfaces of the first column 104a of the first module 102a, respectively. Each beam 112 of the two beams 112 is an I-shaped beam. Each beam 112 includes a first panel 202a, a second panel 202b, and a third panel 202c that perpendicularly extends between the first panel 202a and the second panel 202b. The first panel 202a is positioned at the top end of the first column 104a of the first module 102a and is in contact with the second module 102b once assembled. The first panel 202a includes at least one aperture 204 that cuts through the first panel 202a.

The system 100 includes a first plate 206 that includes a threaded hole 208. The threaded hole 208 is defined at a center of the first plate 206. The first plate 206 has a square shape.

The first column 104a of the first module 102a has a first hollow interior 210 that is defined within the first column 104a. Inner corners of the first column 104a are chamfered. The first column 104a is sized to receive the first plate 206 in the first hollow interior 210. Corners of the first plate 206 are chamfered to fit into the first hollow interior 210.

The system 100 includes an alignment pin 212. The alignment pin 212 has a cylindrical base 214 and a tapered head 216. The alignment pin 212 has a threaded surface 218 on the cylindrical base 214. The alignment pin 212 has an eyelet 220 on the cylindrical base 214.

The system 100 includes a second plate 222 that includes a hole 224. The hole 224 is defined at a center of the second plate 222. The hole 224 is sized to receive the alignment pin 212. The second plate 222 has a square shape.

The first column 108a of the second module 102b has a second hollow interior 226 that is defined within the first column 108a. Inner corners of the first column 108a are chamfered. The first column 108a is sized to receive the second plate 222 in the second hollow interior 226. Corners of the second plate 222 are chamfered to fit into the second hollow interior 226. The first column 108a of the second module 102b includes at least one opening 228 positioned at a bottom side of the first column 108a.

Two beams 112 extend from two side surfaces of the first column 108a of the second module 102b, respectively. Each beam 112 of the two beams 112 is an I-shaped beam. Each beam 112 includes a first panel 202a, a second panel 202b, and a third panel 202c that perpendicularly extends between the first panel 202a and the second panel 202b. The first panel 202a is positioned at the bottom end of the first column 108a of the second module 102b and is in contact with the first module 102a once assembled. The first panel 202a includes at least one aperture 204 (not shown in FIG. 2) that cuts through the first panel 202a.

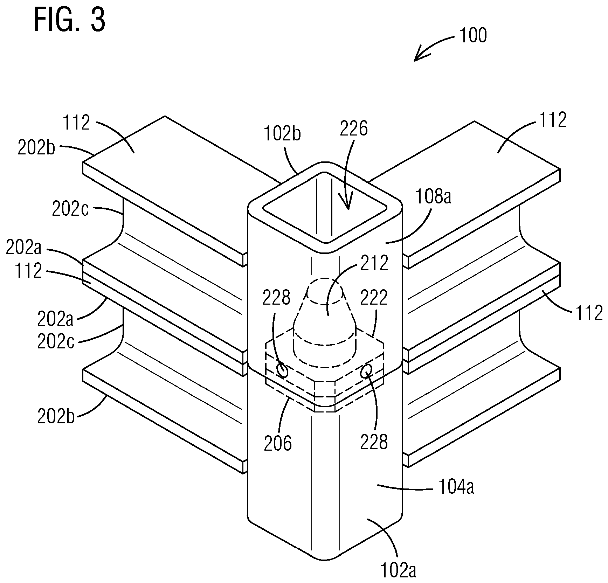

FIG. 3 illustrates a perspective assembled view of the portion of the system 100 in FIG. 2. In the assembled configuration, the second module 102b is stacked on the top of the first module 102a. The first plate 206 is fixedly attached within the first hollow interior 210 of the first column 104a of the first module 102a at a top end that is in contact with the second module 102b. The alignment pin 212 is installed into the first plate 206 by threading the threaded surface 218 into the threaded hole 208 of the first plate 206. The second plate 222 is engaged with the alignment pin 212 through the hole 224 of the second plate 222. The second plate 222 is positioned within the second hollow interior 226 of the first column 108a of the second module 102b at a bottom end that is in contact with the first module 102a. The second plate 222 is fixedly attached to the first column 108a of the second module 102b by plug weld through the openings 228 of first column 108a while the second module 102b is stacked on the top of the first module 102a. The second plate 222 may be plug welded to the first column 108a through four openings 228 each at one side surface of the first column 108a.

The first plate 206, the alignment pin 212, and the second plate 222 are installed in at least two columns of each module, for example, the two opposing columns in a diagonal direction of each module. It is also possible that the first plate 206, the alignment pin 212, and the second plate 222 may be installed in more than two columns of each module, or any other configurations as desired.

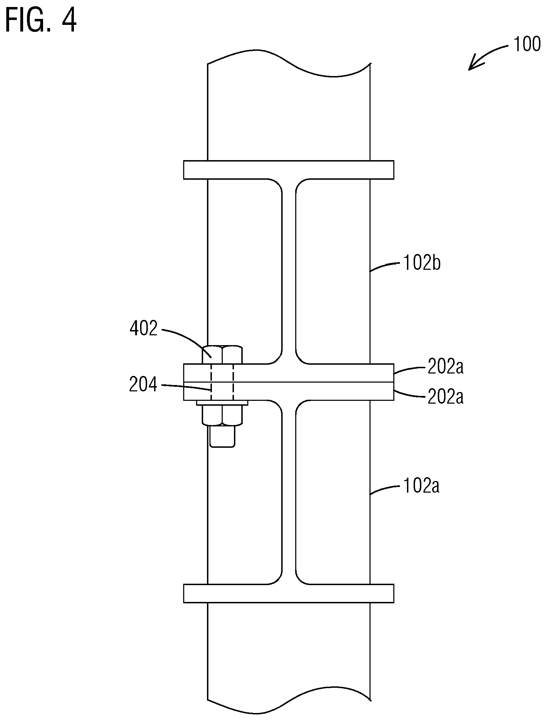

FIG. 4 illustrates a side view of the portion of the system 100 in FIG. 2. At least one fastener 402 fastens the first module 102a to the second module 102b through the aperture 204 on the two first panels 202a of the first module 102a and the second module 102b that are in contact to each other after stacking. The fastener 402 may include, for example, a heavy hex structural bolt, washer, and nut. A plurality of fasteners 402 may be used to fasten the first module 102a and the second module 102b to each other. Similar configurations may apply to each pair of stacked modules.

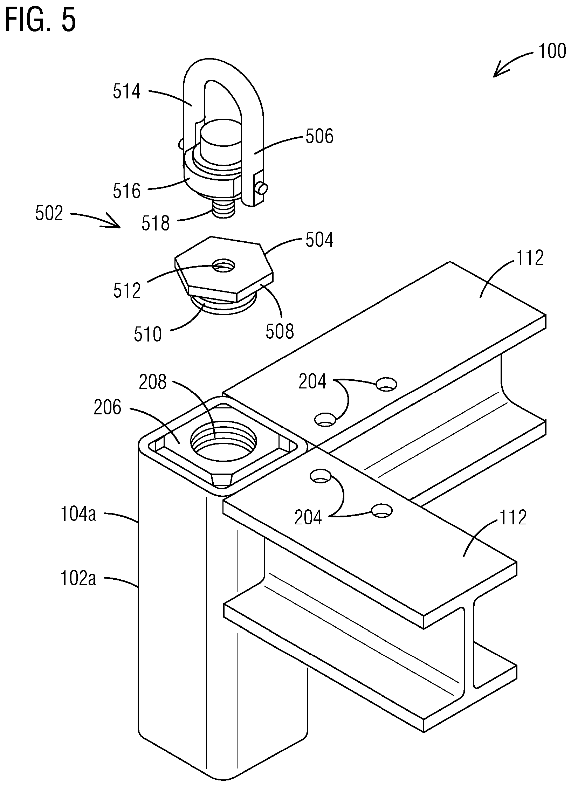

FIG. 5 illustrates a perspective exploded view of a portion of the system 100 in FIG. 1 in a shipping configuration. The system 100 includes a lifting package 502. The lifting package 502 includes a lifting adapter 504 and a lifting hoist ring 506. The lifting adapter 504 has a faceplate 508 and a rod 510 that extends from the faceplate 508. The rod 510 is a threaded cylinder. The lifting adapter 504 has an orifice 512 that is defined in the faceplate 508. The orifice 512 is threaded.

The lifting hoist ring 506 includes a lifting eye 514, a base plate 516, and a bar 518. The lifting eye 514 is attached to the base plate 516. The bar 518 extends from the base plate 516. The bar 518 has a cylindrical shape. The bar 518 has a threaded surface.

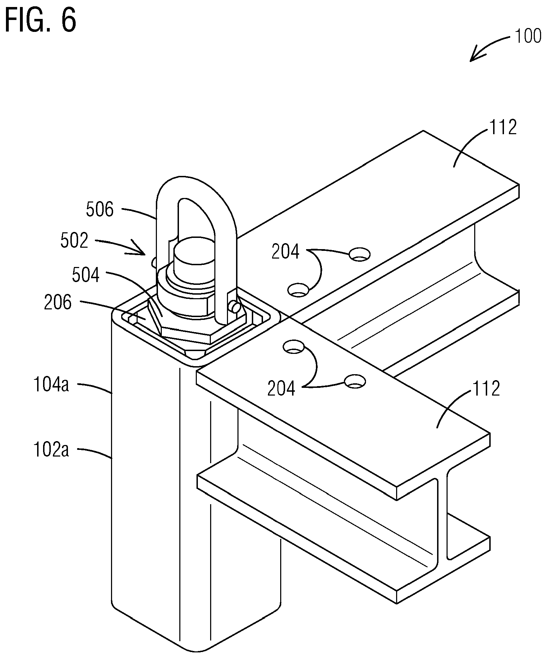

FIG. 6 illustrates a perspective assembled view of the portion of the system 100 in FIG. 5 in the shipping configuration. In the assembled shipping configuration, the lifting package 502 is installed into the first plate 206 that is attached in the first column 104a of the first module 102a. The lifting adapter 504 is installed into the first plate 206 by threading the rod 510 into the threaded hole 208 of the first plate 206. The lifting hoist ring 506 is installed into the lifting adapter 504 by threading the bar 518 into the orifice 512.

With references to FIG. 1 to FIG. 6, before shipping the plurality of modules to a site to be connected with an equipment, such as a gas turbine engine, the plurality of auxiliary packages are installed within the spaces defined in the plurality of modules. The installation of the plurality of auxiliary packages is done in a shop. Once installed, each module contains one of the plurality of auxiliary packages within the structural steel-framed module. The preinstalled auxiliary integrated modules are delivered to the site.

To ensure that the adjacent auxiliary packages are aligned to each other once the plurality of auxiliary integrated modules are assembled on the site, a test fit-up is performed in the shop. For illustration, only the test fit-up of the first module 102a and the second module 102b is described in detail. Similar steps apply to stack other modules.

In the test fit-up, the first module 102a is lifted in an upright position using a lifting machine, such as a crane, to engage with the lifting hoist ring 506 of the lifting package 502. The lifting hoist ring 506 is then removed from the lifting adapter 504. The lifting adapter 504 is removed from the first plate 206 that is attached at the top end of the first column 104a of the first module 102a. The alignment pin 212 is installed into the first plate 206 by threading the threaded surface 218 of the alignment pin 212 into the threaded hole 208 of the first plate 206. The alignment pin 212 may be threaded into the threaded hole 208 of the first plate 206 using a pin type spanner wrench that is engaged into the eyelet 220 of the alignment pin 212. The second plate 222 is set on the alignment pin 212 by placing the alignment pin 212 into the hole 224 of the second plate 222.

The second module 102b is lifted above the first module 102a using a lifting machine, such as a crane, to engage with a lifting package installed on a top plate of the first column 108a of the second module 102b. The second plate is loosely engaged with the alignment pin 212 so that it can be adjusted in an aligned position with respect to the first column 108a of the second module 102b. The aligned position allows the first column 108a of the second module 102b to slide over the second plate 222 when stacking the second module 102b on the top of the first module 102a. The aligned position also aligns the second auxiliary package 118 installed within the second space 110 of the second module 102b with the first auxiliary package 116 installed within the first space 106 of the first module 102a when the second module 102b is stacked on the top of the first module 102a. The first column 108a of the second module 102b slides over the second plate 222 to stack the second module 102b on the top of the first module 102a. The second plate 222 is loosely positioned into the second hollow interior 226 of the first column 108a of the second module 102b in the aligned position. The alignment between the first module 102a and the second module 102b enables all piping flanged connections, and any other connections in the first auxiliary package 116 and the second auxiliary package 118 that are installed within the first module 102a and the second module 102b, respectively, meeting a desired tolerance.

The second plate 222 is fixedly attached at the bottom end of the first column 108a of the second module 102b within the second hollow interior 226 while the second module 102b is stacked on the top of the first module 102a. The fixedly attachment includes a plug weld through the opening 228 on the first column 108a of the second module 102b while the second module 102b is stacked on the top of the first module 102a. The second plate 222 is plug welded to the first column 108a of the first second module 102b through multiple openings 228 on the first column 108a.

The second module 102b is unstacked from the top of the first module 102a after plug welding the second plate 222 to the first column 108a of the second module 102b. The second plate 222 is further fixedly attached to the first column 108a of the second module 102b by fully welding the second plate 222 to the first column 108a of the second module 102b around a perimeter of the first column 108a after the second module 102b is unstacked from the top of the first module 102a. The second module 102b with the second plate 222 fixedly attached in the aligned position is then delivered to the site.

The alignment pin 212 is removed from the first plate 206 and delivered as a loose component to the site. The lifting adapter 504 is reinstalled into the first plate 206 attached in the first column 104a of the first module 102a. The lifting hoist ring 506 is reinstalled into the lifting adapter 504. The first module 102a is then delivered to the site in the shipping configuration.

On the site, the first module 102a is placed in its final location and in an upright position using a lifting machine, such as a crane, to engage with the lifting package 502. The lifting hoist ring 506 of the lifting package 502 is then removed from the lifting adapter 504. The lifting adapter 504 is removed from the first plate 206 that is attached in the first column 104a of the first module 102a. The alignment pin 212 is installed into the first plate 206 that is attached at the top end of the first column 104a of the first module 102a. The second module 102b is stacked on the top of the first module 102a by sliding the second plate 222 that is fixedly attached at the bottom end of the first column 108a of the second module 102b over the alignment pin 212 that is installed in the first plate 206 of the first module 102a. The tapered head 216 of the alignment pin 212 makes it easier to slide the second plate 222 over the alignment pin 212. The first column 108a of the second module 102b may need to be moved slightly to finely align the first module 102a with respect to the second module 102b. For example, the first column 108a of the second module 102b may need to be moved in a rage of +/- 0.5 inch (+/- 12.7 mm), or +/- 0.25 inch (+/- 6.35 mm) to finely tune the alignment between the first module 102a and the second module 102b. The first module 102a and the second module 102b are then fastened to each other by the fasteners 402 through the apertures 204 on the beams 112 of the first module 102a and the second module 102b that are in contact to each other after stacking. The plurality of of auxiliary packages that are integrated in the modules are aligned and do not require additional alignment on the site. Similar steps apply to stack other modules.

The system 100 enables the modules with the preinstalled auxiliary packages stackable and easy to install on the site. The stackable modules with the preinstalled auxiliary packages achieves a repeatable alignment of the modules and interface of the modules on the site. The stackable modules with the preinstalled auxiliary packages enables auto-align the modules on the site as they are stacked onto each other by sliding a respective second plate 222 that is fixedly attached to the bottom end of the first column 108a of the second module 102b in the aligned position into a respective alignment pin 212 that is attached to the top end of the first column 104a of the first module 102a. The stackable modules with the preinstalled auxiliary packages reduce site assembly work, reduce piping field welds, and reduce site material handling.

### LISTING OF DRAWING ELEMENTS

100 system
102a first module
102b second module
102c third module
102d fourth module
102e fifth module
102f sixth module
102g seventh module
102h eighth module
102i ninth module
102j tenth module
104a first column
104b second column
104c third column
104d fourth column
106 first space
108a first column
108b second column
108c third column
108d fourth column
110 second space
112 beam
114 bridge platform
116 first auxiliary package
118 second auxiliary package
202a first panel
202b second panel
202c third panel
204 aperture
206 first plate
208 threaded hole
210 first hollow interior
212 alignment pin
214 cylindrical base
216 tapered head
218 threaded surface
220 eyelet
222 second plate
224 hole
226 second hollow interior
228 opening
402 fastener
502 lifting package
504 lifting adapter
506 lifting hoist ring
508 faceplate
510 rod
512 orifice
514 lifting eye
516 base plate
518 bar

## Claims

1. A system for assembling modules (102a - j), the system comprising:
a first module (102a) having a first set of columns (104a-d) that cooperate to define a first space (106), a first column (104a) of the first set of columns (104a-d) defining a first hollow interior (210);
a second module (102b) having a second set of columns (108a-d) that cooperate to define a second space (110), a first column (108a) of the second set of columns (108a-d) defining a second hollow interior (226);
a first plate (206) fixedly attached to the first column (104a) of the first set of columns (104a-d) within the first hollow interior (210);
an alignment pin (212) coupled to the first plate (206);
a second plate (222) having a hole (224) sized to receive the alignment pin (212), the second plate (222) is engaged with the alignment pin (212) to position the second plate (222) in an aligned position with respect to the first column (108a) of the second set of columns (108a-d); and
an attachment member fixedly attached to the second plate (222) and the first column (108a) of the second set of columns (108a-d) to fixedly attach the second plate (222) in the aligned position within the second hollow interior (226), wherein the attachment member comprises a plug weld, with the first column (108a) of the second set of columns (108a-d) defining an opening (228) that cooperates with the plug weld to fixedly attach the second plate (222) in the aligned position.

2. The system according to claim 1, further comprising:
a first auxiliary package (116) that is installed within the first space (106), and
a second auxiliary package (118) that is installed within the second space (110),
wherein the aligned position aligns the second auxiliary package (118) with the first auxiliary package (116) when the second module (102b) is assembled to the first module (102a).

3. The system according to claim 1 or 2, wherein the first plate (206) is fixedly attached at a top end of the first column (104a) of the first set of columns (104a-d), and wherein the second plate (222) is fixedly attached at a bottom end of the first column (108a) of the second set of columns (108a-d).

4. The system according to any of claims 1 to 3, wherein the attachment member comprises a fully weld after the plug weld.

5. The system according any one of claims 1 to 4, wherein the first plate (206) comprises a threaded hole (208), and wherein the alignment pin (212) comprises a threaded surface (218) to couple the alignment pin (212) to the first plate (206).

6. The system according to any one of claims 1 to 5, wherein the alignment pin (212) has a cylindrical base (214) and a tapered head (216).

7. The system according to any one of claims 1 to 6, wherein the first plate (206) has a square shape, and wherein the first column (104a) of the first set of columns (104a-d) is a square tube to receive the first plate (206).

8. The system according to any one of claims 1 to 7, wherein the second plate (222) has a square shape, and wherein the first column (108a) of the second set of columns (108a-d) is a square tube to receive the second plate (222).

9. The system according to any one of claims 1 to 8, wherein the first module (102a) comprises a beam (112) disposed between two of the first set of columns (104a-d).

10. The system according to any one of claims 1 to 9, wherein the second module (102b) comprises a beam (112) disposed between two of the second set of columns (108a-d).

11. A method for assembling modules (102a-j), the method comprising:
arranging a first module (102a) having a first set of columns (104a-d) that cooperate to define a first space (106), a first column (104a) of the first set of columns (104a-d) defining a first hollow interior (210);
installing a first auxiliary package (116) within the first space (106);
arranging a second module (102b) having a second set of columns (108a-d) that cooperate to define a second space (110), a first column (108a) of the second set of columns (108a-d) defining a second hollow interior (226);
installing a second auxiliary package (118) within the second space (110);
fixedly attaching a first plate (206) at a top end of the first column (104a) of the first set of columns (104a-d) within the first hollow interior (210);
coupling an alignment pin (212) to the first plate (206);
positioning a second plate (222) on the alignment pin (212), the second plate (222) comprising a hole (224) to receive the alignment pin (212);
adjusting a position of the second plate (222) in an aligned position with respect to the first column (108a) of the second set of columns (108a-d);
stacking the second module (102b) on a top of the first module (102a) by sliding the first column (108a) of the second set of columns (108a-d) over the second plate (222) to place the second plate (222) in the aligned position within the second hollow interior (226) that aligns the second auxiliary package (118) with the first auxiliary package (116); and
fixedly attaching the second plate (222) to the first column (108a) of the second set of columns (108a-d) in the aligned position at a bottom end of the first column (108a) of the second set of columns (108a-d) within the second hollow interior (226).

12. The method of claim 11, wherein the fixedly attaching the second plate (222) to the first column (108a) of the second set of columns (108a-d) in the aligned position comprises:
plug welding the second plate (222) to the first column (108a) of the second set of columns (108a-d) while the second module (102b) is stacked on the top of the first module (102a).

13. The method of claims 11 or 12, wherein the fixedly attaching the second plate (222) to the first column (108a) of the second set of columns (108a-d) in the aligned position further comprises:
unstacking the second module (102b) from the top of the first module (102a); and
fully welding the second plate (222) to the first column (108a) of the second set of columns (108a-d) after the unstacking.

## Patentansprüche

1. System zur Montage von Modulen (102a-j), wobei das System Folgendes umfasst:
ein erstes Modul (102a) mit einem ersten Satz von Säulen (104a-d), die zusammenwirken, um einen ersten Raum (106) zu definieren, wobei eine erste Säule (104a) des ersten Satzes von Säulen (104a-d) einen ersten hohlen Innenraum (210) definiert;
ein zweites Modul (102b) mit einem zweiten Satz von Säulen (108a-d), die zusammenwirken, um einen zweiten Raum (110) zu definieren, wobei eine erste Säule (108a) des zweiten Satzes von Säulen (108a-d) einen zweiten hohlen Innenraum (226) definiert; eine erste Platte (206), die fest an der ersten Säule (104a) des ersten Satzes von Säulen (104a-d) innerhalb des ersten hohlen Innenraums (210) befestigt ist;
einen Ausrichtungsstift (212), der mit der ersten Platte (206) gekoppelt ist;
eine zweite Platte (222) mit einem Loch (224), das zum Aufnehmen des Ausrichtungsstifts (212) dimensioniert ist, wobei die zweite Platte (222) mit dem Ausrichtungsstift (212) in Eingriff steht, um die zweite Platte (222) in einer ausgerichteten Position in Bezug auf die erste Säule (108a) des zweiten Satzes von Säulen (108a-d) zu positionieren; und
ein Befestigungselement, das fest an der zweiten Platte (222) und der ersten Säule (108a) des zweiten Satzes von Säulen (108a-d) befestigt ist, um die zweite Platte (222) innerhalb des zweiten hohlen Innenraums (226) fest in der ausgerichteten Position zu befestigen, wobei das Befestigungselement eine Lochschweißung umfasst, wobei die erste Säule (108a) des zweiten Satzes von Säulen (108a-d) eine Öffnung (228) definiert, die mit der Lochschweißung zusammenwirkt, um die zweite Platte (222) fest in der ausgerichteten Position zu befestigen.

2. System nach Anspruch 1, das ferner Folgendes umfasst:
ein erstes Zusatzpaket (116), das innerhalb des ersten Raums (106) installiert ist, und
ein zweites Zusatzpaket (118), das innerhalb des zweiten Raums (110) installiert ist,
wobei die ausgerichtete Position das zweite Zusatzpaket (118) mit dem ersten Zusatzpaket (116) ausrichtet, wenn das zweite Modul (102b) an dem ersten Modul (102a) montiert ist.

3. System nach Anspruch 1 oder 2, wobei die erste Platte (206) fest an einem oberen Ende der ersten Säule (104a) des ersten Satzes von Säulen (104a-d) befestigt ist, und wobei die zweite Platte (222) fest an einem unteren Ende der ersten Säule (108a) des zweiten Satzes von Säulen (108a-d) befestigt ist.

4. System nach einem der Ansprüche 1 bis 3, wobei das Befestigungselement nach der Lochschweißung eine vollständige Schweißung umfasst.

5. System nach einem der Ansprüche 1 bis 4, wobei die erste Platte (206) ein Gewindeloch (208) umfasst, und wobei der Ausrichtungsstift (212) eine Gewindefläche (218) umfasst, um den Ausrichtungsstift (212) mit der ersten Platte (206) zu koppeln.

6. System nach einem der Ansprüche 1 bis 5, wobei der Ausrichtungsstift (212) eine zylindrische Basis (214) und einen verjüngten Kopf (216) aufweist.

7. System nach einem der Ansprüche 1 bis 6, wobei die erste Platte (206) eine rechteckige Form aufweist, und wobei die erste Säule (104a) des ersten Satzes von Säulen (104a-d) ein rechteckiges Rohr zum Aufnehmen der ersten Platte (206) ist.

8. System nach einem der Ansprüche 1 bis 7, wobei die zweite Platte (222) eine rechteckige Form aufweist, und wobei die erste Säule (108a) des zweiten Satzes von Säulen (108a-d) ein rechteckiges Rohr zum Aufnehmen der zweiten Platte (222) ist.

9. System nach einem der Ansprüche 1 bis 8, wobei das erste Modul (102a) einen Träger (112) umfasst, der zwischen zwei des ersten Satzes von Säulen (104a-d) angeordnet ist.

10. System nach einem der Ansprüche 1 bis 9, wobei das zweite Modul (102b) einen Träger (112) umfasst, der zwischen zwei des zweiten Satzes von Säulen (108a-d) angeordnet ist.

11. Verfahren zur Montage von Modulen (102a-j), wobei das Verfahren Folgendes umfasst:
Anordnen eines ersten Moduls (102a) mit einem ersten Satz von Säulen (104a-d), die zusammenwirken, um einen ersten Raum (106) zu definieren, wobei eine erste Säule (104a) des ersten Satzes von Säulen (104a-d) einen ersten hohlen Innenraum (210) definiert;
Installieren eines ersten Zusatzpakets (116) innerhalb des ersten Raums (106);
Anordnen eines zweiten Moduls (102b) mit einem zweiten Satz von Säulen (108a-d), die zusammenwirken, um einen zweiten Raum (110) zu definieren, wobei eine erste Säule (108a) des zweiten Satzes von Säulen (108a-d) einen zweiten hohlen Innenraum (226) definiert;
Installieren eines zweiten Zusatzpakets (118) innerhalb des zweiten Raums (110);
festes Befestigen einer ersten Platte (206) an einem oberen Ende der ersten Säule (104a) des ersten Satzes von Säulen (104a-d) innerhalb des ersten hohlen Innenraums (210);
Koppeln eines Ausrichtungsstifts (212) mit der ersten Platte (206);
Positionieren einer zweiten Platte (222) auf dem Ausrichtungsstift (212), wobei die zweite Platte (222) ein Loch (224) zum Aufnehmen des Ausrichtungsstifts (212) umfasst;
Einstellen einer Position der zweiten Platte (222) in einer ausgerichteten Position in Bezug auf die erste Säule (108a) des zweiten Satzes von Säulen (108a-d);
Stapeln des zweiten Moduls (102b) auf einer Oberseite des ersten Moduls (102a) durch Verschieben der ersten Säule (108a) des zweiten Satzes von Säulen (108a-d) über die zweite Platte (222), um die zweite Platte (222) innerhalb des zweiten hohlen Innenraums (226) in der ausgerichteten Position zu platzieren, die das zweite Zusatzpaket (118) mit dem ersten Zusatzpaket (116) ausrichtet; und
festes Befestigen der zweiten Platte (222) an der ersten Säule (108a) des zweiten Satzes von Säulen (108a-d) in der ausgerichteten Position an einem unteren Ende der ersten Säule (108a) des zweiten Satzes von Säulen (108a-d) innerhalb des zweiten hohlen Innenraums (226).

12. Verfahren nach Anspruch 11, wobei das feste Befestigen der zweiten Platte (222) an der ersten Säule (108a) des zweiten Satzes von Säulen (108a-d) in der ausgerichteten Position Folgendes umfasst:
Lochschweißen der zweiten Platte (222) an die erste Säule (108a) des zweiten Satzes von Säulen (108a-d), während das zweite Modul (102b) auf der Oberseite des ersten Moduls (102a) gestapelt ist.

13. Verfahren nach Anspruch 11 oder 12, wobei das feste Befestigen der zweiten Platte (222) an der ersten Säule (108a) des zweiten Satzes von Säulen (108a-d) in der ausgerichteten Position ferner Folgendes umfasst:
Entstapeln des zweiten Moduls (102b) von der Oberseite des ersten Moduls (102a); und
vollständiges Schweißen der zweiten Platte (222) an die erste Säule (108a) des zweiten Satzes von Säulen (108a-d) nach dem Entstapeln.

## Revendications

1. Système de montage de modules (102a - j), le système comprenant :
un premier module (102a) comportant un premier ensemble de colonnes (104a-d) qui coopèrent pour définir un premier espace (106), une première colonne (104a) du premier ensemble de colonnes (104a-d) définissant un premier intérieur creux (210) ; un second module (102b) comportant un second ensemble de colonnes (108a-d) coopérant pour définir un second espace (110), une première colonne (108a) du second ensemble de colonnes (108a-d) définissant un second intérieur creux (226) ;
une première plaque (206) fixée à demeure à la première colonne (104a) du premier ensemble de colonnes (104a-d) au sein du premier intérieur creux (210) ;
une broche d'alignement (212) accouplée à la première plaque (206) ;
une seconde plaque (222) comportant un trou (224) dimensionné pour recevoir la broche d'alignement (212), la seconde plaque (222) étant en prise avec la broche d'alignement (212) pour positionner la seconde plaque (222) dans une position alignée par rapport à la première colonne (108a) du second ensemble de colonnes (108a-d) ; et
un élément de fixation fixé à demeure à la seconde plaque (222) et à la première colonne (108a) du second ensemble de colonnes (108a-d) pour fixer à demeure la seconde plaque (222) dans la position alignée à l'intérieur du second intérieur creux (226), l'élément de fixation comprenant une soudure en bouchon, la première colonne (108a) du second ensemble de colonnes (108a-d) définissant une ouverture (228) qui coopère avec la soudure en bouchon pour fixer à demeure la seconde plaque (222) dans la position alignée.

2. Système selon la revendication 1, comprenant en outre :
un premier boîtier auxiliaire (116) qui est installé au sein du premier espace (106), et
un second boîtier auxiliaire (118) qui est installé au sein du second espace (110),
la position alignée alignant le second boîtier auxiliaire (118) avec le premier boîtier auxiliaire (116) lorsque le second module (102b) est assemblé au premier module (102a).

3. Système selon la revendication 1 ou 2, la première plaque (206) étant fixée à demeure au niveau d'une extrémité supérieure de la première colonne (104a) du premier ensemble de colonnes (104a-d), et la seconde plaque (222) étant fixée à demeure au niveau d'une extrémité inférieure de la première colonne (108a) du second ensemble de colonnes (108a-d).

4. Système selon l'une quelconque des revendications 1 à 3, l'élément de fixation comprenant une soudure complète après la soudure en bouchon.

5. Système selon l'une quelconque des revendications 1 à 4, la première plaque (206) comprenant un trou fileté (208), et la broche d'alignement (212) comprenant une surface filetée (218) pour accoupler la broche d'alignement (212) à la première plaque (206).

6. Système selon l'une quelconque des revendications 1 à 5, la broche d'alignement (212) comprenant une base cylindrique (214) et une tête conique (216).

7. Système selon l'une quelconque des revendications 1 à 6, la première plaque (206) ayant une forme carrée, et la première colonne (104a) du premier ensemble de colonnes (104a-d) étant un tube carré pour recevoir la première plaque (206).

8. Système selon l'une quelconque des revendications 1 à 7, la seconde plaque (222) ayant une forme carrée, et la première colonne (108a) du second ensemble de colonnes (108a-d) étant un tube carré pour recevoir la seconde plaque (222).

9. Système selon l'une quelconque des revendications 1 à 8, le premier module (102a) comprenant un faisceau (112) disposé entre deux colonnes du premier ensemble de colonnes (104a-d).

10. Système selon l'une quelconque des revendications 1 à 9, le second module (102b) comprenant un faisceau (112) disposé entre deux colonnes du second ensemble de colonnes (108a-d).

11. Procédé de montage de modules (102a-j), le procédé comprenant les étapes consistant à :
disposer un premier module (102a) comportant un premier ensemble de colonnes (104a-d) qui coopèrent pour définir un premier espace (106), une première colonne (104a) du premier ensemble de colonnes (104a-d) définissant un premier intérieur creux (210) ; installer un premier boîtier auxiliaire (116) au sein du premier espace (106) ;
disposer un second module (102b) comportant un second ensemble de colonnes (108a-d) qui coopèrent pour définir un second espace (110), une première colonne (108a) du second ensemble de colonnes (108a-d) définissant un second intérieur creux (226) ;
installer un second boîtier auxiliaire (118) au sein du second espace (110) ;
fixer à demeure une première plaque (206) à une extrémité supérieure de la première colonne (104a) du premier ensemble de colonnes (104a-d) au sein du premier intérieur creux (210) ;
accoupler une broche d'alignement (212) à la première plaque (206) ;
positionner une seconde plaque (222) sur la broche d'alignement (212), la seconde plaque (222) comportant un trou (224) pour recevoir la broche d'alignement (212) ;
ajuster une position de la seconde plaque (222) dans une position alignée par rapport à la première colonne (108a) du second ensemble de colonnes (108a-d) ;
empiler le second module (102b) sur une partie supérieure du premier module (102a) en faisant coulisser la première colonne (108a) du second ensemble de colonnes (108a-d) sur la seconde plaque (222) pour placer la seconde plaque (222) dans la position alignée à l'intérieur du second intérieur creux (226) qui aligne le second boîtier auxiliaire (118) avec le premier boîtier auxiliaire (116) ; et
fixer à demeure la seconde plaque (222) à la première colonne (108a) du second ensemble de colonnes (108a-d) dans la position alignée au niveau d'une extrémité inférieure de la première colonne (108a) du second ensemble de colonnes (108a-d) à l'intérieur du second intérieur creux (226).

12. Procédé selon la revendication 11, la fixation à demeure de la seconde plaque (222) à la première colonne (108a) du second ensemble de colonnes (108a-d) dans la position alignée comprenant l'étape consistant à :
souder en bouchon la seconde plaque (222) à la première colonne (108a) du second ensemble de colonnes (108a-d) tandis que le second module (102b) est empilé sur la partie supérieure du premier module (102a).

13. Procédé selon la revendication 11 ou 12, la fixation à demeure de la seconde plaque (222) à la première colonne (108a) du second ensemble de colonnes (108a-d) dans la position alignée comprenant en outre l'étape consistant à :
désempiler le second module (102b) de la partie supérieure du premier module (102a) ; et
souder complètement la seconde plaque (222) à la première colonne (108a) du second ensemble de colonnes (108a-d) après le désempilement.
